# EUROPEAN PATENT SPECIFICATION

(11) **EP 2 254 447 B1**
(45) Date of publication and mention of the grant of the patent: **22.02.2012**
(21) Application number: 09708020.4
(22) Date of filing: 30.01.2009
(51) Int. Cl.: A47J 19/06

(54) **FOOD PRESS APPARATUS AND METHOD OF RICING**
LEBENSMITTELPRESSVORRICHTUNG UND PRESSVERFAHREN
APPAREIL POUR PRESSER DES ALIMENTS ET PROCÉDÉ DE PRESSION

(30) Priority: 08.02.2008 GB 0802338
(43) Date of publication of application: 01.12.2010
(73) Proprietor: OZ10 Limited, Andover Hampshire SP10 3FG (GB)
(72) Inventor: MILLER, Austen, Hampshire RG28 7NB (GB)
(74) Representative: Kay, Ross Marcel
(86) International application number: PCT/GB2009/050088
(87) International publication number: WO 2009/098500

(56) References cited:
- US-A- 1 712 802
- US-A- 5 463 941
- US-A1- 2005 081 385
- US-A1- 2005 263 016
- US-A1- 2007 289 455
- US-B1- 6 505 548

## Description

The present invention relates to a food press apparatus of the type that, for example, comprises an apertured region for passing a piece of a foodstuff therethrough. The present invention also relates to a method of ricing a piece of a foodstuff of the type that, for example, comprises urging the piece of the foodstuff through an apertured region.

In the field of food preparation, particularly for those who cannot eat whole foodstuffs, for example infants, it is known to break food up into softer and more manageable component parts for feeding the infant, particularly when weaning a baby.

In order to make the consistency of the food suitable for consumption by an infant or person unable to eat whole foodstuffs, a so-called blender or food processor can be used. The blender comprises a jug-like vessel having a lid, and a rotating blade arrangement disposed towards the base of the vessel. The blade arrangement of the blender is electrically rotatable and serves to decimate or disintegrate a foodstuff placed in the vessel.

Another known device is a so-called "mouli". The mouli is a multiple-part mill comprising a disc-like grating and a handle. The mouli is arranged so that when the handle is turned, food is urged through the perforated disc so that pureed food is produced.

However, the above devices are sometimes unsuitable for feeding an infant for a number of reasons. Firstly, the blender is not portable and requires a power source; the blender is also heavy and large in dimension. Secondly, the consistency of the food after processing by the blender can be undesirably smooth for feeding the infant and achieving a courser consistency is not easy with a blender. Additionally, particularly in the case of the mouli, egress of pureed food occurs, which can be undesirable, for example in a restaurant environment. Also, it is necessary to decant the pureed food into another vessel or onto a surface, for example a plate.

A so-called ricer or press is an alternative device known for pureeing vegetables, particularly potatoes. The ricer, somewhat akin to a garlic press, comprises a vessel coupled to a first handle, the vessel having a perforated base. A second handle is coupled to a piston, the piston being coupled to a disc that is slidable within the vessel. The vessel is filled with a foodstuff, for example a vegetable, and the second handle is used to slide the disc towards the perforated base so as to urge the vegetable against and through the perforated base as much as possible in order to obtain pureed vegetable exiting the vessel. However, as in the case of the blender and the mouli, the puree of the vegetable is not obtained in a clean manner and use of the ricer results in the creation of mess that is undesirable in some environments. US 2007/289455 discloses an example of a food press similar to a ricer.

According to a first aspect of the present invention, there is provided a food press apparatus comprising: a receptacle portion for receiving a piece of a foodstuff, the receptacle portion comprising a base constituting a blind end; a plunger portion comprising an apertured region; wherein the receptacle portion and the plunger portion are arranged so as to be moveable from a first position to a second position so as to move, when in use, the apertured region through an internal volume of the receptacle portion.

The receptacle portion and the plunger portion may be arranged to provide, when in use, a clearance between the base of the receptacle portion and the apertured region.

The apparatus may further comprise a handle part comprising the receptacle portion.

The receptacle portion may be a recess formed in the handle part.

The receptacle portion may be located at a distal end of the handle part.

The plunger portion may be hingedly arranged with respect to the receptacle portion.

The apparatus may further comprise another handle part comprising the plunger portion. The plunger portion may be located at a distal end of the another handle portion.

The plunger portion may be removable from the another handle part. The plunger portion may be snap fittable to the another handle part.

The apertured region may be removable. The apertured region may be snap fittable to the plunger portion.

The apparatus may further comprise an end cap comprising the apertured region. The end cap may have a substantially half egg-shaped surface profile. The end cap may be removable.

The plunger portion may comprise a substantially hollow volume. The plunger portion may be substantially tubular.

The first position may be an open position and/or the second position may be a closed position. In the second position, the plunger portion may substantially reside in the receptacle portion.

The hollow volume may be arranged to receive, when in use, material from the receptacle portion after passage through the apertured region.

The apertured region may be located at a first distal end of the plunger portion and an opening is located at a second distal end of the plunger portion.

The opening may provide access to the hollow volume for retrieving the material therefrom.

The handle part may be hingedly coupled to the another handle part. The another handle part may be arranged to receive an eating implement.

The eating implement may be a spoon.

The another handle part may comprise a recessed region for receiving a shaft of the eating implement. The recessed region may be arranged to receive the shaft snugly therein. The recessed region may be arranged to receive the shaft therein as a push-fit.

The apparatus may further comprise a cover portion arranged, when in use, to overlie the another handle part for preventing egress of foodstuff. The cover portion may comprise a recess for storing a replacement end cap comprising another apertured region. The cover portion may be snap fittable to the handle portion.

The plunger portion may be arranged with respect to the receptacle portion so as to be removably hingable. The hinge may comprise a snap or push fit.

The plunger portion may be arranged to carry a peripheral seal. The peripheral seal may be a peripheral lip. The end cap may carry the peripheral seal.

The apertured portion may comprise a plurality of apertures provided therein between a first surface and a second surface thereof.

The plunger portion may be longitudinally arcuate in shape.

The receptacle portion and the plunger portion may be complementarily shaped so that the plunger portion may be capable of slidably translating within the receptacle portion.

According to a second aspect of the present invention, there is provided a method of ricing a piece of a foodstuff, the method comprising: providing a receptacle portion for receiving a piece of a foodstuff, the receptacle portion comprising a base constituting a blind end; providing a plunger portion comprising an apertured region; and moving the plunger portion from a first position to a second position with respect to the receptacle portion so as to translate, when in use, the apertured region through an internal volume of the receptacle portion.

According to a third aspect of the present invention, there is provided a food press kit comprising: a receptacle portion for receiving a piece of a foodstuff, the receptacle portion comprising a base constituting a blind end; a plunger portion comprising an optionally separable apertured region; wherein the receptacle portion and the plunger portion are arranged so as to be moveable from a first position to a second position so as to move, when in use, the apertured region through an internal volume of the receptacle portion.

It is thus possible to provide a food press apparatus and a method of ricing that is portable and manual. Additionally, it is possible to reproduce easily a degree of consistency for a foodstuff, the degree of consistency being selectable. It is also possible to serve the processed food in a simple manner that does not generate mess and without the need to decant the processed food. Furthermore, the food press apparatus does not present a cutting risk to the user due to the absence of sharp edges.

At least one embodiment of the invention will now be described, by way of example only, with reference to the accompanying drawings, in which:
**Figure 1** is a schematic diagram of an apparatus in a part-assembled state, the apparatus constituting an embodiment of the invention;
**Figure 2** is a schematic diagram of the apparatus of Figure 1 in a closed position;
**Figure 3** is a schematic diagram of the apparatus of Figure 2 carrying an eating implement;
**Figure 4** is a schematic diagram of the apparatus of Figure 1 coupled to a cover piece;
**Figure 5** is a schematic diagram of the cover piece of Figure 4;
**Figure 6** is a schematic diagram of the apparatus of Figure 1 in an open position; and
**Figure 7** is a schematic, partially cut-away, diagram of the apparatus of Figure 1 in a partially closed position.

Throughout the following description identical reference numerals will be used to identify like parts.

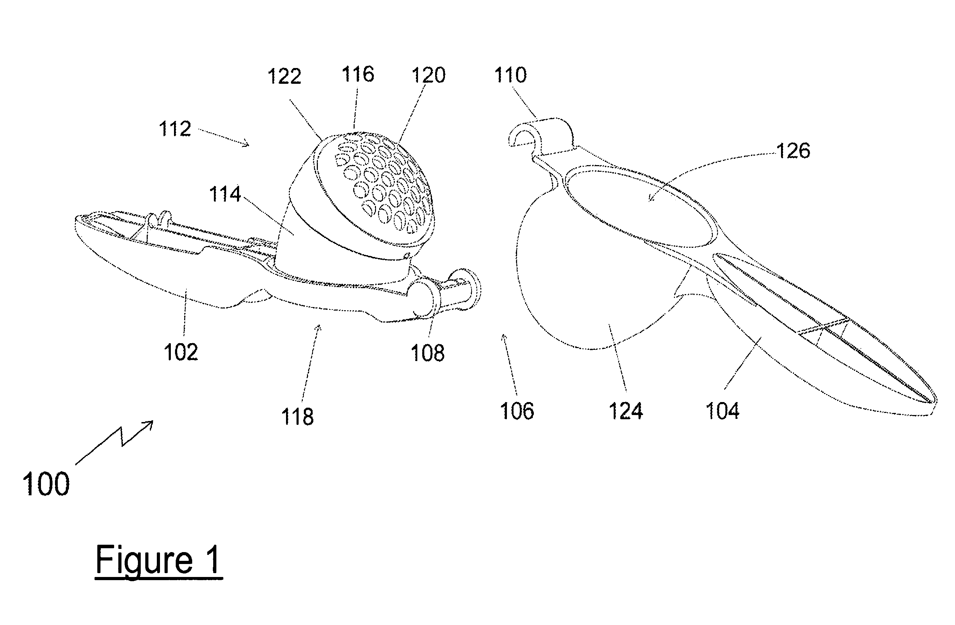

Referring to Figure 1, a food press apparatus 100 for ricing or mashing a foodstuff for feeding to an infant comprises a first handle part 102 and a second handle part 104. Respective parts of a hinge arrangement 106 are provided at a distal end of the first handle part 102 and the second handle part 104. In this respect, a lateral pin-like protrusion 108 is integrally formed at the distal end of the first handle part 102. A curled tongue-like portion, for example a lateral hook portion 110, is integrally formed at the distal end of the second handle portion 104. The pin-like protrusion 108 and the hook portion 110 are complementarily shaped so that the pin-like protrusion 108 and the hook portion 110 can be pressed into engagement by a snap fit so as to form the hinge arrangement 106. The first and second handle parts 102, 104 are thus pivotable about a longitudinal axis of the pin-like protrusion 108, but removably separable for hygiene and cleaning purposes.

The first handle part 102 comprises a plunger portion 112 located near the distal end of the first handle part 102 and that, although not shown in Figure 1, attaches to the first handle part 102 by a snap fit for hygiene and cleaning purposes. However, the skilled person should appreciate that the plunger portion 112 can be integrally formed with the first handle part 102. The plunger portion 112 comprises an arcuate body portion 114 coupled to an end cap portion 116. The arcuate body portion 114 is hollow, for example tubular, and has a first access opening 118. A second access opening (not shown) is covered by the end cap portion 116.

The end cap portion 116 is removable and concave in profile, for example substantially half egg-shaped or teardrop shaped. The end cap portion 116 has a region comprising a plurality of apertures 120, for example an array of apertures, the plurality of apertures 120 being of a first predetermined diameter. In this example, the plurality of apertures 120 is arranged in a uniform manner, for example as an array or matrix. However, the skilled person should appreciate that the distribution of the apertures over the surface of the end cap portion 116 does not have to be uniform. Furthermore, the above example implies that the apertures are circular in shape. However, other shaped apertures can be employed or a mixture of aperture shapes can be employed. Indeed, the shape of the apertures need not all be the same and the apertures sizes can vary or vary within a range of sizes for the end cap portion 116. The end cap portion 116 also has a peripheral lip 122. The end cap portion 116 engages, in this example, the body portion 114 by means of a pair of side-clips, though a push-fit can be employed. Of course, if the body portion 114 and the end cap portion 116 are integrally formed the body portion 114 simply comprises the apertured region.

The second handle part 104 comprises a receptacle portion 124 defining, in this example, a well or internal volume 126. In this example, the receptacle portion 124 is formed as a recess in the second handle part 104 near the distal end of the second handle part 104. The plunger portion 112 and the receptacle portion are complementarily shaped so that the plunger portion 112 is snugly slidable within the internal volume 126 of the receptacle portion 124 in a substantially sealing manner. In this example, the receptacle portion 124 is shaped so as to provide a clearance (not shown) at the bottom (blind end) of the receptacle portion 124 when the plunger portion 112 resides in the receptacle portion 124 to as full an extent as permitted by the first and second handle parts 102, 104 when brought together to close the food press apparatus 100.

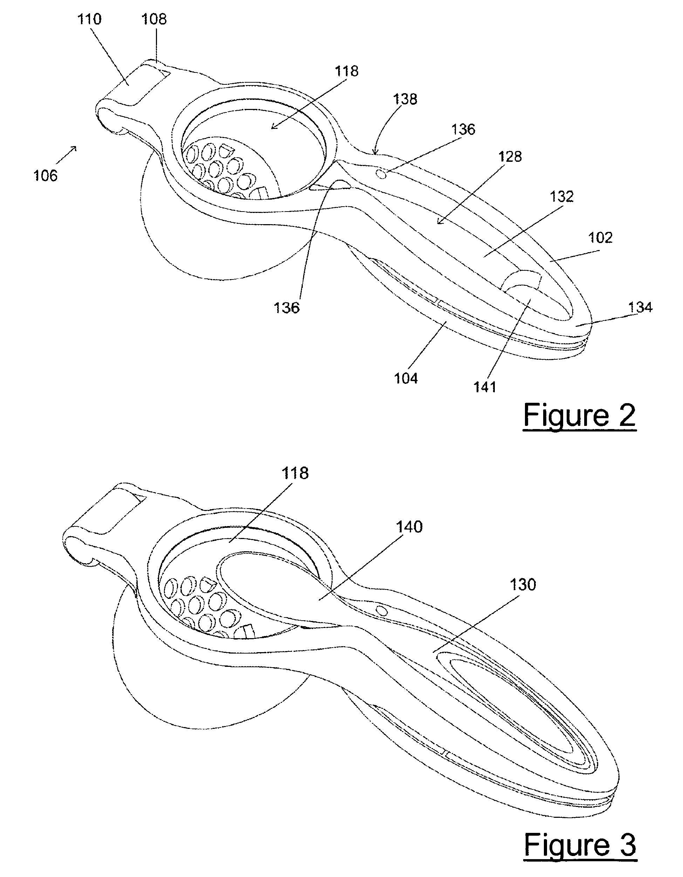

Turning to Figure 2, the first handle part 102 comprises a recess 128. In this example, the recess 128 is profiled so as to match the footprint of at least part of an eating implement, for example a feeding spoon 130 for an infant (Figure 3), such as a shaft of the eating implement. The recess 128 is formed from a base 132 surrounded, in part, by a shallow peripheral wall 134. The shallow peripheral wall 134 is formed from a resiliently deformable material, for example resin, and has a pair of side protrusion 136 disposed adjacent a neck region 138 of the first handle part 102 in order to retain the eating implement in-situ when not needed. If desired, the shallow peripheral wall 134 can be form from or coated with an elastomeric material in order to facilitate removable retention of the eating implement. Of course, the skilled person should appreciate that either part, or all, of the first handle part 102 can be coated with the elastomeric material. When in-situ, a working part of the eating implement, for example a bowl 140 of the feeding spoon 130 overlies the first access opening 118. In order to facilitate removal of the eating implement without finger contact with the working part of the eating implement, for example the bowl 140, respective push apertures 141 are provided at respective another distal ends of the first handle part 102 and the second handle part 104 in order to enable a user to release the eating implement from retention in the recess 128 of the first handle part 102 by insertion of a finger or other elongate body into the push apertures 141.

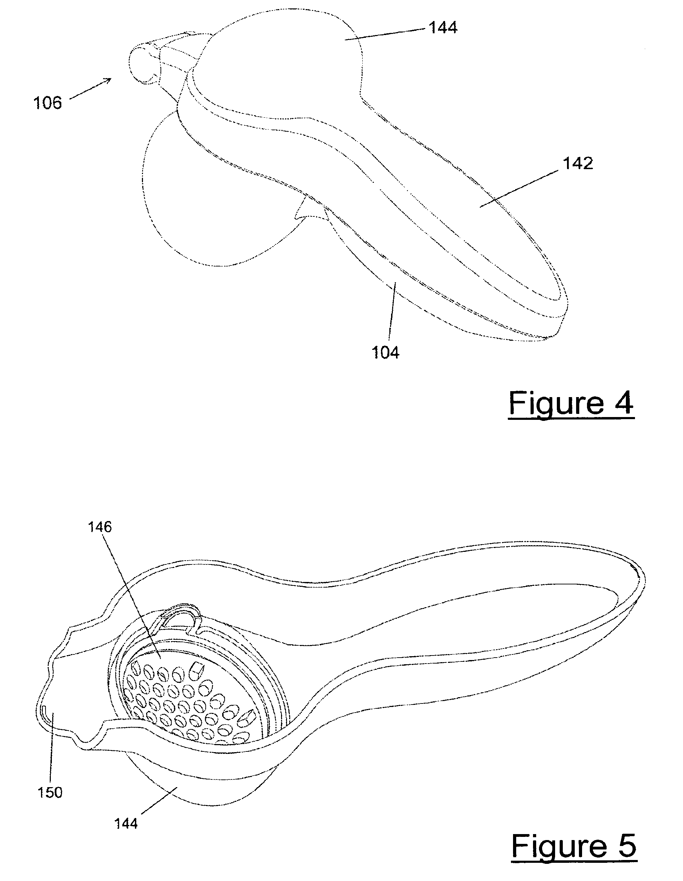

Referring to Figure 4, a cover portion 142 is shaped to overlie the first handle part 102 (concealed in Figure 4) and detachably couple to the second handle part 104 by a snap fit. The cover portion 142 extends to cover the length and width of the first handle part 102 but, in this example, stops short of the hinge arrangement 106. The cover portion 142 also comprises a recessed portion 144 that serves as a storage compartment for storing a replacement end cap portion 146 (Figure 5). The replacement end cap portion 146 is held in the cover portion 142 by a snap fit or a push fit. A plurality of apertures of the replacement end cap portion 146 can be of a like configuration to the end cap portion 116, or configured differently to provide different food processing results to the end cap portion 116. A finger lip 150 is provided at a distal end of the cover portion 142 to facilitate removal thereof from the second handle part 104.

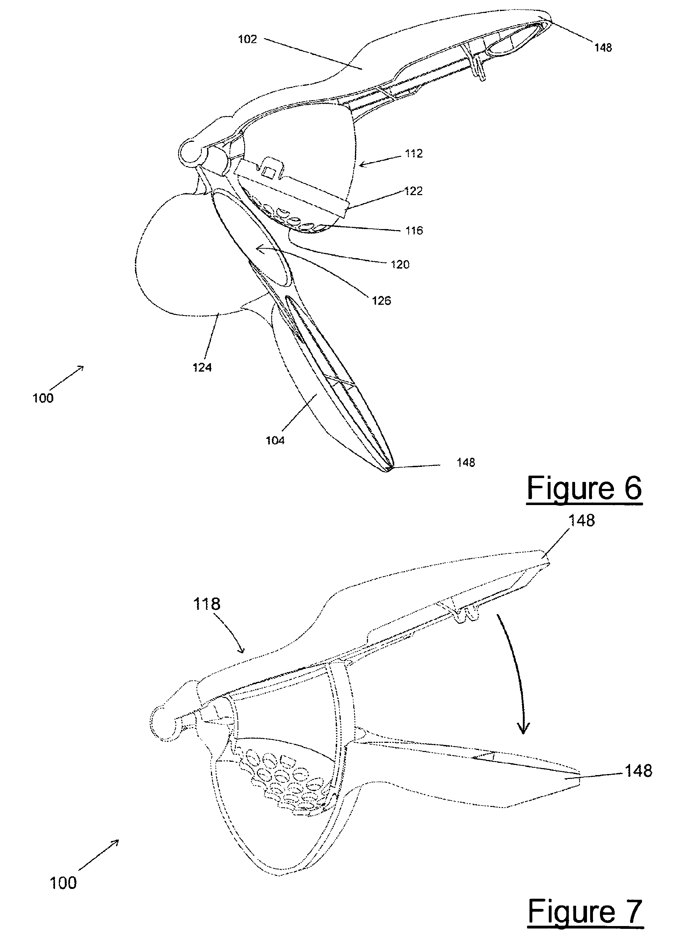

In operation (Figure 6), assuming the food press apparatus 100 has been pre-assembled, the food press apparatus 100 is placed in an open position by manipulating the first and second handle portions 102, 104 by separating proximal ends 148 thereof so as to provide an access to the internal volume 126 of the receptacle portion 124. A piece or portion of foodstuff, for example, potato or another vegetable, or a portion of a mixture of foodstuffs, is placed in the internal volume 126 of the receptacle.

Referring to Figure 7, the food press apparatus 100 is then closed by pivotally bringing the distal ends 148 of the first and second handle parts 102, 104 together so as to translate the plunger portion 112 into the internal volume 126 of the receptacle 124, the end cap portion 116 being urged against the portion of the foodstuff so as to cause the foodstuff to start passing through the apertures 120 of the end cap portion 116 resulting in a change in consistency of the foodstuff, for example the foodstuff becomes mashed, riced and/or pureed. As the food press apparatus 100 reaches the closed position, an increased amount of the foodstuff passes through the end cap portion 116 and breaks-up during passage therethrough. Due to the presence of the peripheral lip 122, a sealing effect is achieved between the plunger portion 112 and the receptacle portion 124, thereby avoiding egress of some of the foodstuff around the sides of the plunger portion, particularly but not exclusively, in a spurting action. The clearance provided at the bottom of the receptacle portion 124 prevents any residual solids or hard parts of the foodstuff, for example pips, opposing substantially full closure of the food press apparatus 100 so as to cause the end cap 116 to crack or otherwise break.

The broken-down foodstuff now residing within the volume of the hollow plunger portion 112 is accessible therefrom via the first access opening 118. Consequently, the processed foodstuff can be, for example, spooned out of the hollow plunger portion 112 and fed to an infant.

When use of the food press apparatus 100 is complete, the cover portion 142 can be placed over the first handle portion 102 and snapped into place by engagement with the second handle part 102 as described above. The presence of the cover portion 142 prevents egress of unused or residual foodstuff still located within the food press apparatus 100.

Although the above-described food press apparatus 100 has been described as formed from separate piece-parts, the skilled person should appreciate that two or more parts of the food press apparatus 100 can be integrally formed. In the above example, the formation of the food press apparatus 100 from separate piece parts facilitates efficient cleaning. Also, the parts of the food press apparatus 100 are sized so as to fit in a sterilizer.

## Claims

1. A food press apparatus (100) comprising:
a receptacle portion (124) for receiving a piece of a foodstuff ;
a plunger portion (112) comprising an apertured region (116, 120); wherein
the receptacle portion (124) and the plunger portion (112) are arranged so as to be moveable from a first position to a second position so as to move, when in use, the apertured region (116, 120) through an internal volume (126) of the receptacle portion (124), **characterized in that** the receptacle portion (124) comprises a base constituting a blind end.

2. An apparatus as claimed in Claim 1, wherein the receptacle portion (124) and the plunger portion (112) are arranged to provide, when in use, a clearance between the base of the receptacle portion (124) and the apertured region (116, 120).

3. An apparatus as claimed in Claim 1 or Claim 2, further comprising a handle part (104) extending from the receptacle portion (124).

4. An apparatus as claimed in any one of the preceding claims, further comprising another handle part (102) extending from the plunger portion (112).

5. An apparatus as claimed in any one of the preceding claims, wherein the apertured region (116, 120) is removable.

6. An apparatus as claimed in any one of the preceding claims, wherein the plunger portion (112) comprises a substantially hollow volume.

7. An apparatus as claimed in Claim 6, wherein the hollow volume is arranged to receive, when in use, material from the receptacle portion (124) after passage through the apertured region (116, 120).

8. An apparatus as claimed in any one of the preceding claims, wherein the apertured region (116, 120) is located at a first distal end of the plunger portion (112) and an opening (118) is located at a second distal end of the plunger portion (112).

9. An apparatus as claimed in Claim 8, when dependent upon Claim 6 or Claim 7, wherein the apertured region (116, 120) is located at a first distal end of the plunger portion (112) and an opening (118) is located at a second distal end of the plunger portion (112), the opening (118) providing access to the hollow volume for retrieving the material therefrom.

10. An apparatus as claimed in any one of the preceding claims, wherein the plunger portion (112) is arranged with respect to the receptacle portion (124) so as to be removably hingable.

11. An apparatus as claimed in any one of the preceding claims, wherein the plunger portion (112) is arranged to carry a peripheral seal.

12. An apparatus as claimed in any one of the preceding claims, wherein the plunger portion (112) is longitudinally arcuate in shape.

13. An apparatus as claimed in any one of the preceding claims, wherein the receptacle portion (124) and the plunger portion (112) are complementarily shaped so that the plunger portion (112) is capable of slidably translating within the receptacle portion (124).

14. A method of ricing a piece of a foodstuff, the method comprising:
providing a receptacle portion (124) for receiving a piece of a foodstuff, the receptacle portion (124 comprising a base having a blind end;
providing a plunger portion (112) comprising an apertured region (116, 120); and
moving the plunger portion (112) from a first position to a second position with respect to the receptacle portion (124) so as to translate, when in use, the apertured region (116, 120) through an internal volume (126) of the receptacle portion (124).

15. A food press kit comprising:
a receptacle portion (124) for receiving a piece of a foodstuff, the receptacle portion (124) comprising a base having a blind end;
a plunger portion (112) comprising an optionally separable apertured region (116, 120); wherein
the receptacle portion (124) and the plunger portion (112) are arranged so as to be moveable from a first position to a second position so as to move, when in use, the apertured region (116, 120) through an internal volume (126) of the receptacle portion (124).

## Patentansprüche

1. Ein Nahrungsmittelpressgerät (100), umfassend:
- einen Aufnahmeteil (124) zur Aufnahme eines Stücks eines Nahrungsmittels,
- einen Kolbenteil (112), einen gelochten Bereich (116, 120) umfassend, wobei der Aufnahmeteil (124) und der Kolbenteil (112) derart angeordnet sind, dass sie von einer ersten Position in eine zweite Position bewegbar ausgestaltet sind, so dass bei Gebrauch der gelochte Bereich (116, 120) durch ein Innenvolumen (126) des Aufnahmeteils (124) bewegt wird,
**dadurch gekennzeichnet, dass**
der Aufnahmeteil (124) eine ein geschlossenes Ende bildende Basis umfasst.

2. Ein Gerät nach Anspruch 1, wobei der Aufnahmeteil (124) und der Kolbenteil (112) derart angeordnet sind, dass sie bei Gebrauch einen Freiraum zwischen der Basis des Aufnahmeteils (124) und dem gelochten Bereich (116, 120) bereitstellen.

3. Ein Gerät nach Anspruch 1 oder 2, weiterhin umfassend einen Griffteil (104), der sich vom Aufnahmeteil (124) ausgehend erstreckt.

4. Ein Gerät nach einem der voranstehenden Ansprüche, ferner umfassend einen weiteren Griffteil (102), der sich vom Kolbenteil (112) ausgehend erstreckt.

5. Ein Gerät nach einem der voranstehenden Ansprüche, wobei der gelochte Bereich (116, 120) herausnehmbar ist.

6. Ein Gerät nach einem der voranstehenden Ansprüche, wobei der Kolbenteil (112) einen großenteils hohlen Raum umfasst.

7. Ein Gerät nach Anspruch 6, wobei der Hohlraum so ausgestaltet ist, dass er im Gebrauch Material aus dem Aufnahmeteil (124) nach dem Durchtritt des Materials durch den gelochten Bereich (116, 120) aufnimmt.

8. Ein Gerät nach einem der voranstehenden Ansprüche, wobei der gelochte Bereich (116, 120) an einem ersten distalen Ende des Kolbenteils (112) angeordnet ist und eine Öffnung (118) an einem zweiten distalen Ende des Kolbenteils (112) angeordnet ist.

9. Ein Gerät nach Anspruch 8 bei Abhängigkeit von Anspruch 6 oder 7, wobei der gelochte Bereich (116, 120) an einem ersten distalen Ende des Kolbenteils (112) angeordnet ist und eine Öffnung (118) an einem zweiten distalen Ende des Kolbenteils (112) angeordnet ist, wobei die Öffnung (118) Zugang zu dem Hohlraum zur Entnahme des Materials daraus bereitstellt.

10. Ein Gerät nach einem der voranstehenden Ansprüche, wobei der Kolbenteil (112) bezüglich des Aufnahmeteils (124) so ausgestaltet ist, dass er abnehmbar gelenkig angebracht ist.

11. Ein Gerät nach einem der voranstehenden Ansprüche, wobei der Kolbenteil (112) so ausgestaltet ist, dass er eine Umfangsdichtung aufweist.

12. Ein Gerät nach einem der voranstehenden Ansprüche, wobei der Kolbenteil (112) in Längsrichtung bogenförmig ist.

13. Ein Gerät nach einem der voranstehenden Ansprüche, wobei der Aufnahmeteil (124) und der Kolbenteil (112) aufeinander abgestimmt so geformt sind, dass der Kolbenteil (112) sich innerhalb des Aufnahmeteils (124) gleitend verschieben kann.

14. Ein Verfahren des Pressens eines Stücks eines Nahrungsmittels, das Verfahren umfassend:
- Bereitstellen eines Aufnahmeteils (124) zur Aufnahme eines Stücks eines Nahrungsmittels, wobei der Aufnahmeteil (124) eine ein geschlossenes Ende aufweisende Basis umfasst,
- Bereitstellen eines einen gelochten Bereich (116, 120) umfassenden Kolbenteils (112); und
- Bewegen des Kolbenteils (112) von einer ersten Position in eine zweite Position in Bezug auf den Aufnahmeteil (124), so dass im Gebrauch der gelochte Bereich (116, 120) durch ein Innenvolumen (126) des Aufnahmeteils (124) bewegt wird.

15. Ein Nahrungsmittelpresseinrichtung, umfassend:
- einen Aufnahmeteil (124) zur Aufnahme eines Stücks eines Nahrungsmittels, wobei der Aufnahmeteil (124) eine ein geschlossenes Ende aufweisende Basis umfasst;
- einen Kolbenteil (112), der einen optional herausnehmbaren gelochten Bereich (116, 120) umfasst; wobei
- der Aufnahmeteil (124) und der Kolbenteil (112) derart angeordnet sind, dass sie von einer ersten Position in eine zweite Position bewegbar ausgestaltet sind, so dass bei Gebrauch der gelochte Bereich (116, 120) durch ein Innenvolumen (126) des Aufnahmeteils (124) bewegt wird.

## Revendications

1. Appareil (100) conçu pour presser des aliments, comprenant :
une partie (124) formant réceptacle, destinée à recevoir un morceau de denrée alimentaire ;
une partie (112) formant pilon, munie d'une région perforée (116, 120) ; sachant que
la partie (124) formant réceptacle et la partie (112) formant pilon sont agencées avec mobilité d'une première position à une seconde position, de manière à imprimer en service, à la région perforée (116, 120), un mouvement traversant un volume intérieur (126) de ladite partie (124) formant réceptacle, **caractérisé par le fait que** la partie (124) formant réceptacle est pourvue d'une base constituant une extrémité occultée.

2. Appareil selon la revendication 1, dans lequel la partie (124) formant réceptacle et la partie (112) formant pilon sont agencées de manière à réserver, en service, un espace interstitiel entre la région perforée (116, 120) et la base de ladite partie (124) formant réceptacle.

3. Appareil selon la revendication 1 ou 2, comprenant en outre une partie (104) formant poignée, qui part de la partie (124) formant réceptacle.

4. Appareil selon l'une quelconque des revendications précédentes, comprenant en outre une autre partie (102) formant poignée, qui part de la partie (112) formant pilon.

5. Appareil selon l'une quelconque des revendications précédentes, dans lequel la région perforée (116, 120) est amovible.

6. Appareil selon l'une quelconque des revendications précédentes, dans lequel la partie (112) formant pilon offre un volume substantiellement creux.

7. Appareil selon la revendication 6, dans lequel le volume creux est conçu pour recevoir, en service, de la matière qui provient de la partie (124) formant réceptacle et a traversé la région perforée (116, 120).

8. Appareil selon l'une quelconque des revendications précédentes, dans lequel la région perforée (116, 120) est située à une première extrémité distale de la partie (112) formant pilon, et un orifice (118) est situé à une seconde extrémité distale de ladite partie (112) formant pilon.

9. Appareil selon la revendication 8 dépendant de la revendication 6 ou de la revendication 7, dans lequel la région perforée (116, 120) est située à une première extrémité distale de la partie (112) formant pilon et un orifice (118) est situé à une seconde extrémité distale de ladite partie (112) formant pilon, ledit orifice (118) procurant accès au volume creux, en vue d'une récupération de la matière à partir de ce dernier.

10. Appareil selon l'une quelconque des revendications précédentes, dans lequel la partie (112) formant pilon est agencée avec faculté de dissociation articulée par rapport à la partie (124) formant réceptacle.

11. Appareil selon l'une quelconque des revendications précédentes, dans lequel la partie (112) formant pilon est conçue pour porter un joint périphérique.

12. Appareil selon l'une quelconque des revendications précédentes, dans lequel la partie (112) formant pilon présente une configuration longitudinalement courbe.

13. Appareil selon l'une quelconque des revendications précédentes, dans lequel la partie (124) formant réceptacle et la partie (112) formant pilon présentent des configurations complémentaires, de telle sorte que ladite partie (112) formant pilon soit apte à accomplir un déplacement glissant à l'intérieur de ladite partie (124) formant réceptacle.

14. Procédé de broyage d'un morceau de denrée alimentaire, ledit procédé consistant à :
fournir une partie (124) formant réceptacle, destinée à recevoir un morceau de denrée alimentaire, ladite partie (124) formant réceptacle étant pourvue d'une base constituant une extrémité occultée ;
fournir une partie (112) formant pilon, munie d'une région perforée (116, 120) ; et
mouvoir ladite partie (112) formant pilon d'une première position à une seconde position, par rapport à ladite partie (124) formant réceptacle, de manière à déplacer, en service, la région perforée (116, 120) à travers un volume intérieur (126) de ladite partie (124) formant réceptacle.

15. Ensemble presse-aliments comprenant :
une partie (124) formant réceptacle, destinée à recevoir un morceau de denrée alimentaire, ladite partie (124) formant réceptacle étant pourvue d'une base présentant une extrémité occultée ;
une partie (112) formant pilon, munie d'une région perforée (116, 120) dissociable en option ; sachant que
ladite partie (124) formant réceptacle et ladite partie (112) formant pilon sont agencées avec mobilité d'une première position à une seconde position, de manière à imprimer en service, à ladite région perforée (116, 120), un mouvement traversant un volume intérieur (126) de ladite partie (124) formant réceptacle.
